# EUROPÄISCHE PATENTANMELDUNG

(11) **EP 2 887 094 A1**
(43) Veröffentlichungstag der Anmeldung: **24.06.2015**
(21) Anmeldenummer: 14197671.2
(22) Anmeldetag: 12.12.2014
(51) Int. Cl.: G01S 15/93, G01S 7/52, G01S 15/87

(54) **Verfahren zum Betreiben einer Mehrzahl von Ultraschallsensoren eines Kraftfahrzeugs, Ultraschallsensoreinrichtung und Kraftfahrzeug**

(30) Priorität: 17.12.2013 DE 102013021327
(71) Anmelder: Valeo Schalter und Sensoren GmbH, 74321 Bietigheim-Bissingen (DE)
(72) Erfinder: Ludwig, Michael, 68159 Mannheim (DE); Hallek, Michael, 74321 Bietigheim-Bissingen (DE)

(57) **Zusammenfassung**

Die Erfindung betrifft ein Verfahren zum Betreiben einer Mehrzahl von Ultraschallsensoren (3) eines Kraftfahrzeugs (1) mittels eines Steuergeräts (7) des Kraftfahrzeugs (1), wobei durch das Steuergerät (7) jeweilige Eigenfrequenzen (fE) der Ultraschallsensoren (3) erfasst werden und für die Ultraschallsensoren (3) in Abhängigkeit von der jeweiligen Eigenfrequenz (fE) jeweils eine Sendefrequenz (fS) festgelegt wird, mit welcher der jeweilige Ultraschallsensor (3) zum Aussenden eines Ultraschallsendesignals (5) durch das Steuergerät (7) angesteuert wird, wobei zur Kompensation von Unterschieden in den Eigenfrequenzen (fE) der Ultraschallsensoren (3) durch das Steuergerät (7) die Sendefrequenz (fS) für zumindest einen der Ultraschallsensoren (3) auch in Abhängigkeit von der Eigenfrequenz (fE) zumindest eines anderen der Ultraschallsensoren (3) festgelegt wird.

## Beschreibung

Die Erfindung betrifft ein Verfahren zum Betreiben einer Mehrzahl von Ultraschallsensoren eines Kraftfahrzeugs mittels eines Steuergeräts des Kraftfahrzeugs, wobei durch das Steuergerät jeweilige Eigenfrequenzen der Ultraschallsensoren erfasst werden und für die Ultraschallsensoren in Abhängigkeit von der jeweiligen Eigenfrequenz jeweils eine Sendefrequenz festgelegt wird. Die Ultraschallsensoren werden dann durch das Steuergerät zum Aussenden eines Ultraschallsendesignals mit der zuvor festgelegten Sendefrequenz angesteuert. Die Erfindung betrifft außerdem eine Ultraschallsensoreinnchtung für ein Kraftfahrzeug, welche zum Durchführen eines solchen Verfahrens ausgebildet ist, sowie ein Kraftfahrzeug mit einer solchen Ultraschallsensoreinrichtung.

Ultraschallsensoren für Kraftfahrzeuge sind bereits aus dem Stand der Technik in vielfältiger Ausgestaltung bekannt. Sie werden üblicherweise zum Unterstützen des Fahrers beim Manövrieren des Kraftfahrzeugs eingesetzt, insbesondere beim Durchführen von Parkvorgängen. Mittels der Ultraschallsensoren werden dabei Abstände zu Hindernissen gemessen, die sich in der Umgebung des Kraftfahrzeugs befinden. Die Ultraschallsensoren gehören hier zu einer Fahrerassistenzeinrichtung, welche als Parkhilfe bezeichnet wird. Jedoch werden Ultraschallsensoren heutzutage auch immer häufiger außerhalb dieser eigentlichen Parkhilfefunktionalität eingesetzt, wie beispielsweise zur Fahrunterstützung mit aktiven Bremseingriffen, d.h. bei automatischen Bremsassistenzsystemen, bei Systemen zur Totwinkelüberwachung, bei Systemen zur Abstandshaltung, bei Kollisionserkennungssystemen und dergleichen.

Ultraschallsensoren arbeiten nach dem Echolaufzeitprinzip: Die Abstandsmessung erfolgt in der Ultraschalltechnologie mittels eines Echolaufzeitverfahrens bzw. Echolotverfahrens. Der Ultraschallsensor sendet ein Sendesignal - Ultraschall - aus und empfängt ein Empfangssignal, das ebenfalls ein Schallsignal ist und einem Signalanteil des ausgesendeten und an einem Hindernis reflektierten Sendesignals entspricht. Es werden also Ultraschallwellen ausgesendet, von einem Objekt reflektiert und wieder durch denselben Ultraschallsensor und/oder einen benachbarten Ultraschallsensor desselben Kraftfahrzeugs empfangen und ausgewertet. In Abhängigkeit von der gemessenen Laufzeit der Ultraschallwelle wird dann der Abstand und gegebenenfalls auch die relative Position und/oder eine Relativgeschwindigkeit relativ zum Kraftfahrzeug bestimmt.

Das Interesse richtet sich vorliegend insbesondere auf verdeckte Ultraschallsensoren, welche an der Rückseite bzw. Innenseite eines Verkleidungsteils - insbesondere eines Stoßfängers - verdeckt und somit versteckt angeordnet sind. Die Eigenfrequenz (d.h. Resonanzfrequenz) von derartigen Ultraschallsensoren wird deutlich stärker durch das Verkleidungsteil beeinflusst, da die Membran direkt an der Rückseite des Verkleidungsteils anliegt und die Eigenfrequenz des Ultraschallsensors somit einer Resonanzfrequenz eines Schwingungssystems entspricht, welches sowohl durch die Membran als auch durch einen Bereich des Verkleidungsteils gebildet ist. Der Einfluss des Verkleidungsteils auf die Ultraschallsensoren ist dabei unterschiedlich. Dieses Problem wurde bereits in dem Dokument DE 10 2011 016 287 A1 erkannt und dadurch gelöst, dass die Betriebsfrequenz des Ultraschallsensors in Abhängigkeit von der erfassten Eigenfrequenz geregelt wird. Die Eigenfrequenz wird dabei aus einem Ausschwingverhalten eines abklingenden Sendeimpulses nach Beendigung eines Anregungssignals bestimmt. Für die Regelung der Betriebsfrequenz wird dann eine Regelgröße aus der ermittelten Eigenfrequenz bestimmt.

Im Stand der Technik wird die Sendefrequenz bzw. Betriebsfrequenz des Ultraschallsensors also an die ermittelte Eigenfrequenz angepasst, um das schwingende System optimal betreiben zu können. Als nachteilig an diesem Stand der Technik ist jedoch der Umstand anzusehen, dass aufgrund der individuellen Anpassung der Sendefrequenzen an die jeweilige Eigenfrequenz keine Kreuzmessungen zwischen den Ultraschallsensoren möglich sind, bei denen ein erster Ultraschallsensor das Sendesignal aussendet und ein zweiter Ultraschallsensor die Zielechos empfängt. Die Sendefrequenzen unterscheiden sich nämlich deutlich von den Eigenfrequenzen der Ultraschallsensoren, so dass der zweite Ultraschallsensor aufgrund seiner Schmalbandigkeit die Zielechos nicht empfangen kann. Die Berechnung der Triangulation zur Bestimmung der relativen Position von Zielobjekten, wie sie beispielsweise in dem Dokument DE 103 61 315 A1 beschrieben ist, ist somit bei einer Regelung der Sendefrequenz auf die Eigenfrequenz nicht möglich.

Ein Verfahren zum Erkennen eines vereisten und/oder verschmutzten Zustands eines Ultraschallsensors ist beispielsweise aus dem Dokument DE 10 2012 000 948 A1 bekannt.

Es ist Aufgabe der Erfindung, eine Lösung aufzuzeigen, wie bei einem Verfahren der eingangs genannten Gattung, insbesondere bei verdeckt angeordneten Ultraschallsensoren, Kreuzmessungen zwischen zwei Sensoren ermöglicht werden können.

Diese Aufgabe wird erfindungsgemäß durch ein Verfahren, durch eine Ultraschallsensoreinrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Betreiben einer Mehrzahl von Ultraschallsensoren eines Kraftfahrzeugs mit Hilfe eines Steuergeräts des Kraftfahrzeugs. Durch das Steuergerät werden jeweilige Eigenfrequenzen der Ultraschallsensoren erfasst, und für die Ultraschallsensoren wird in Abhängigkeit von der jeweiligen Eigenfrequenz jeweils eine Sendefrequenz festgelegt. Mit dieser Sendefrequenz wird der jeweilige Ultraschallsensor dann zum Aussenden eines Ultraschallsendesignals durch das Steuergerät angesteuert. Mit anderen Worten werden durch die Ultraschallsensoren Ultraschallsendesignale ausgesendet, welche die jeweilige, zuvor festgelegte Sendefrequenz aufweisen. Bei der Sendefrequenz handelt es sich dabei um diejenige Frequenz, mit welcher die jeweilige Membran der Ultraschallsensoren aktiv angeregt wird. Die Sendefrequenz entspricht somit einer Anregungsfrequenz. Demgegenüber entspricht die Eigenfrequenz vorzugsweise einer Ausschwingfrequenz, d.h. einer Frequenz, mit welcher die Membran nach Beendigung der Anregung ausschwingt. Erfindungsgemäß ist vorgesehen, dass zur Kompensation von Unterschieden in den Eigenfrequenzen der Ultraschallsensoren das Steuergerät die Sendefrequenz für zumindest einen der Ultraschallsensoren auch in Abhängigkeit von der Eigenfrequenz zumindest eines anderen Ultraschallsensors festlegt.

Erfindungsgemäß wird demnach die Sendefrequenz zumindest eines Ultraschallsensors nicht nur in Abhängigkeit von seiner Eigenfrequenz festgelegt, sondern auch unter Berücksichtigung der Eigenfrequenz zumindest eines anderen Ultraschallsensors. Auf diese Art und Weise kann einerseits ein optimaler Betrieb des zumindest einen Ultraschallsensors gewährleistet bzw. sichergestellt werden; andererseits werden auch Kreuzmessungen ermöglicht, bei denen der eine Ultraschallsensor das Sendesignal aussendet und der andere Sensor Zielechos empfängt. Zwar wird der zumindest eine Ultraschallsensor nicht genau bei seiner Eigenfrequenz betrieben, dies beeinflusst jedoch nicht wesentlich den Berieb dieses Ultraschallsensors und ermöglicht andererseits auch die Durchführung der genannten Kreuzmessungen. Die Sendefrequenz des zumindest einen Ultraschallsensors kann nämlich derart festgelegt werden, dass diese Sendefrequenz zwischen der Eigenfrequenz dieses Ultraschallsensors einerseits und der Eigenfrequenz des zumindest einen weiteren Ultraschallsensors andererseits liegt.

In einer Ausführungsform ist vorgesehen, dass die Sendefrequenz des zumindest einen Ultraschallsensors in Abhängigkeit von der Eigenfrequenz zumindest eines benachbarten Ultraschallsensors festgelegt wird, insbesondere eines Sensors, welcher unmittelbar benachbart angeordnet ist. Alternativ kann es aber auch ein nicht unmittelbar benachbarter Sensor sein (z.B. mit ein oder zwei dazwischenliegenden Sensoren, d.h. der übernächste oder überübernächste Sensor). Hierdurch werden Kreuzmessungen zwischen benachbarten Ultraschallsensoren ermöglicht.

Es kann auch vorgesehen sein, dass die Sendefrequenz des zumindest einen Ultraschallsensors in Abhängigkeit von einer Position des Ultraschallsensors am Kraftfahrzeug relativ zu dem zumindest einen anderen Ultraschallsensor festgelegt wird. Bei der Festlegung der Sensefrequenz kann demnach auch die Position der Ultraschallsensoren am Kraftfahrzeug berücksichtigt werden. Da Kreuzmessungen eine bestimmte Relativposition der beteiligten Sensoren voraussetzen, kann dadurch die Durchführung solcher Kreuzmessungen weiterhin begünstigt werden.

Es erweist sich als besonders vorteilhaft, wenn die Sendefrequenz des zumindest einen Ultraschallsensors in Abhängigkeit von jeweiligen Eigenfrequenzen von zumindest zwei anderen der Ultraschallsensoren festgelegt wird. Kreuzmessungen zwischen mehreren Ultraschallsensoren können somit durchgeführt werden.

Hierbei kann vorgesehen sein, dass die Sendefrequenz des zumindest einen Ultraschallsensors - insbesondere mehrerer Ultraschallsensoren - anhand einer Ausgleichsfunktion (Fitting Function) festgelegt wird, welche zu den Eigenfrequenzen des zumindest einen Ultraschallsensors und der zumindest zwei anderen Ultraschallsensoren definiert wird und eine Abhängigkeit der festzulegenden Sendefrequenz von der Position der Ultraschallsensoren darstellt. Anhand einer derartigen Ausgleichsfunktion lässt sich die jeweilige Sendefrequenz für mehrere Ultraschallsensoren derart bestimmen, dass zwischen jeweils zwei benachbarten Ultraschallsensoren eine Kreuzmessung möglich ist.

Als Ausgleichsfunktion kann insbesondere ein Polynom Maximal (N-1)-ten Grades definiert werden, wobei N die Anzahl von Ultraschallsensoren bezeichnet, deren Eigenfrequenzen zum Definieren der Ausgleichsfunktion verwendet werden. Der Grad des Polynoms kann also in einem Wertebereich von 1 bis N-1 liegen. Die Festlegung der Ausgleichsfunktion und der Sendefrequenzen kann somit jeweils optimal hinsichtlich der Kreuzmessungen vorgenommen werden.

Zur Definition der Ausgleichsfunktion werden vorzugsweise nicht die Eigenfrequenzen aller Ultraschallsensoren verwendet, sondern lediglich einer Gruppe von Ultraschallsensoren, welche im Betrieb durch das Steuergerät ausgewählt wird.

In diesem Zusammenhang kann das Steuergerät die Ultraschallsensoren auf einen blockierten, insbesondere vereisten und/oder verschmutzten, Zustand hin überprüfen. Zum Definieren der Ausgleichsfunktion können dann ausschließlich Eigenfrequenzen von nicht blockierten Ultraschallsensoren verwendet werden. Das Steuergerät identifiziert also eine Einschränkung der Funktionalität der Ultraschallsensoren, und die Ultraschallsensoren mit eingeschränkter Funktionalität bleiben bei der Bestimmung der Ausgleichsfunktion unberücksichtigt. Eine negative Beeinflussung der Ausgleichsfunktion durch nicht-plausible Werte kann somit verhindert werden.

Die Detektion eines blockierten Zustands der Ultraschallsensoren kann beispielsweise derart erfolgen, wie dies in dem Dokument DE 10 2012 000 948 A1 beschrieben ist. Zur Detektion des blockierten Zustands können aber auch andere Sensorparameter herangezogen werden, wie beispielsweise die Sensortemperatur, die Ausschwingzeit und dergleichen.

Ergänzend oder alternativ kann zu jeweils zwei benachbarten Ultraschallsensoren jeweils eine Differenz zwischen den Eigenfrequenzen dieser Ultraschallsensoren bestimmt und mit einem vorgegebenen Grenzwert verglichen werden. Die Eigenfrequenzen dieser einander benachbarten Ultraschallsensoren werden dann beim Definieren der Ausgleichsfunktion nur berücksichtigt, wenn die Differenz kleiner als der Grenzwert ist bzw. den Grenzwert nicht überschreitet. Ist die Differenz zwischen den Eigenfrequenzen größer als der Grenzwert, bleiben diese Eigenfrequenzen bei der Bestimmung der Ausgleichsfunktion unberücksichtigt. Auch dadurch kann verhindert werden, dass Ausreißer den Verlauf der Ausgleichsfunktion negativ beeinflussen.

Weiterhin ergänzend oder alternativ kann vorgesehen sein, dass durch das Steuergerät überprüft wird, ob die Eigenfrequenzen der Ultraschallsensoren innerhalb eines vorgegebenen Referenzwertebereiches liegen. Hierbei überprüft das Steuergerät also, ob die absoluten Werte der Eigenfrequenzen innerhalb eines vorgegebenen Referenzwertebereiches liegen. Zum Bestimmen der Ausgleichsfunktion können dann ausschließlich Eigenfrequenzen innerhalb des Referenzwertebereiches verwendet werden. Auch somit kann eine Ausgleichsfunktion definiert werden, welche einerseits für einen zuverlässigen Betrieb der einzelnen Ultraschallsensoren sorgt und andererseits auch die Durchführung von Kreuzmessungen ermöglicht.

Diejenigen Ultraschallsensoren, deren Eigenfrequenz nicht zur Bestimmung der Ausgleichsfunktion verwendet wird, d.h. deren Eigenfrequenz außerhalb des Referenzwertebereiches liegt und/oder bei denen die Differenz größer als der Grenzwert ist, werden vorzugsweise bei ihren jeweiligen Eigenfrequenzen betrieben. Dies bedeutet, dass für diese Ultraschallsensoren jeweils eine Sendefrequenz festgelegt wird, welche der jeweiligen Eigenfrequenz entspricht. Diese Ultraschallsensoren können somit zur Durchführung der einfachen Abstandsmessungen optimal betrieben werden.

Das vorgeschlagene Verfahren erweist sich insbesondere bei verdeckten Ultraschallsensoren als besonders vorteilhaft, welche an einer Rückseite eines Verkleidungsteils des Kraftfahrzeugs angeordnet sind. Die jeweilige Eigenfrequenz entspricht dann einer Resonanzfrequenz eines Schwingungssystems aus einer Membran des jeweiligen Ultraschallsensors und einem zugeordneten Bereich des Verkleidungsteils.

Wie bereits ausgeführt, können bei dem Verfahren Kreuzmessungen durchgeführt werden: Beim Aussenden des Ultraschallsendesignals durch den zumindest einen Ultraschallsensor kann zumindest ein anderer der Ultraschallsensoren, insbesondere zumindest ein benachbarter Ultraschallsensor, als Empfangssensor betrieben werden, welcher in einer Umgebung des Kraftfahrzeugs reflektierte Signalanteile des Ultraschallsendesignals empfängt. Hierbei kann anhand einer Triangulation eine relative Position eines Zielobjekts bezüglich des Kraftfahrzeugs bestimmt werden.

Die Erfindung betrifft auch eine Ultraschallsensoreinrichtung für ein Kraftfahrzeug, umfassend eine Mehrzahl von Ultraschallsensoren sowie ein Steuergerät, welches zum Durchführen eines erfindungsgemäßen Verfahrens ausgebildet ist.

Ein erfindungsgemäßes Kraftfahrzeug, insbesondere ein Personenkraftwagen, umfasst eine erfindungsgemäße Ultraschallsensoreinrichtung.

Die mit Bezug auf das erfindungsgemäße Verfahren vorgestellten bevorzugten Ausführungsformen und deren Vorteile gelten entsprechend für die erfindungsgemäße Ultraschallsensoreinrichtung sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines Ausführungsbeispiels sowie unter Bezugnahme auf die beigefügten Zeichnungen näher erläutert.

Es zeigen:
- Fig. 1: in schematischer Darstellung ein Kraftfahrzeug mit einer Ultraschallsensoreinrichtung gemäß einer Ausführungsform der Erfindung;
- Fig. 2 bis 4: Diagramme zur Erläuterung eines Verfahrens gemäß einer Ausführungsform der Erfindung; und
- Fig. 5: ein Flussdiagramme des Verfahrens.

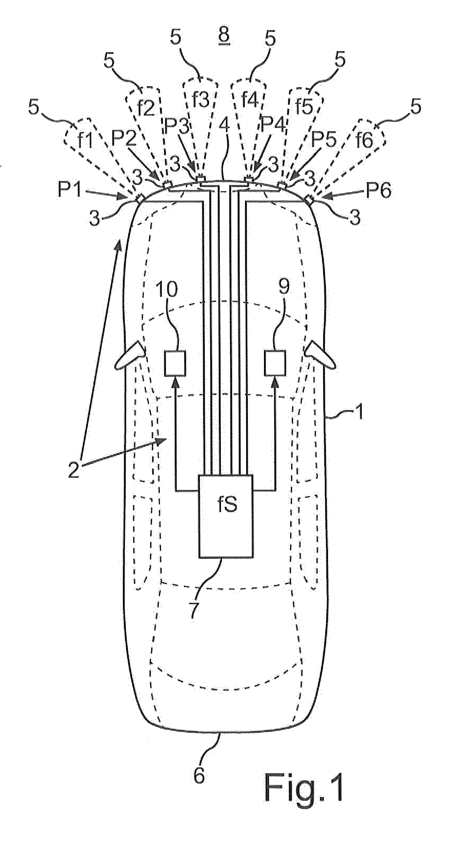

Ein in Fig. 1 dargestelltes Kraftfahrzeug 1 ist beispielsweise ein Personenkraftwagen. Das Kraftfahrzeug 1 umfasst eine Ultraschallsensoreinrichtung 2, welche beispielsweise eine Parkhilfe oder ein Parkassistenzsystem ist. Die Ultraschallsensoreinrichtung 2 dient zum Unterstützten des Fahrers beim Durchführen von Parkvorgängen. Sie umfasst zu diesem Zwecke eine Vielzahl von Ultraschallsensoren 3, welche an einem vorderen Stoßfänger 4 verteilt angeordnet sind und zum Aussenden jeweiliger Ultraschallsendesignale 5 ausgebildet sind. Entsprechende Ultraschallsensoren 3 können auch an einem hinteren Stoßfänger 6 angeordnet sein. Alle Ultraschallsensoren 3 sind mit einem Steuergerät 7 elektrisch gekoppelt, welches die Ultraschallsensoren 3 zum Aussenden der jeweiligen Ultraschallsendesignale 5 ansteuert. Hierbei gibt das Steuergerät 7 auch jeweilige Sendefrequenzen fS für die Ultraschallsensoren 3 vor. Das Steuergerät 7 empfängt auch Messdaten von den Ultraschallsensoren 3 und bestimmt in Abhängigkeit von diesen Messdaten die Abstände zwischen dem Kraftfahrzeug 1 und in seiner Umgebung 8 befindlichen Hindernissen. Es kann auch eine relative Position der Hindernisse bezüglich des Kraftfahrzeugs 1 bestimmt werden, indem Kreuzmessungen durchgeführt werden und beispielsweise die Methode der Triangulation angewendet wird. In Abhängigkeit von den erfassten Abständen kann das Steuergerät 7 beispielsweise einen Lautsprecher 9 und/oder eine optische Anzeigeeinrichtung 10, etwa ein Display, ansteuern. Mit Hilfe des Lautsprechers 9 und/oder der Anzeigeeinrichtung 10 wird der Fahrer über die gemessenen Abstände informiert.

Gegebenenfalls kann die Ultraschallsensoreinrichtung 2 auch ein automatisches oder semi-automatisches Parkassistenzsystem sein, mittels welchem eine Parklücke automatisch detektiert und eine geeignete Parkbahn automatisch berechnet wird, entlang welcher das Kraftfahrzeug 1 dann automatisch oder semi-autonom in die Parklücke geführt werden kann. Bei vollautomatischen Parkassistenzsystemen übernimmt die Ultraschallsensoreinrichtung 2 sowohl die Längsführung als auch die Querführung des Kraftfahrzeugs 1, während bei semi-automatischen bzw. halbautomatischen Systemen die Ultraschallsensoreinrichtung 2 lediglich die Querführung und somit die Lenkung automatisch übernimmt, während der Fahrer selbst Gas geben und bremsen muss. Es sind auch Systeme bekannt, bei denen der Fahrer sowohl die Längsführung als auch die Querführung selbst übernehmen muss, jedoch Hinweise bezüglich der Lenkung durch die Ultraschallsensoreinrichtung 2 ausgegeben werden.

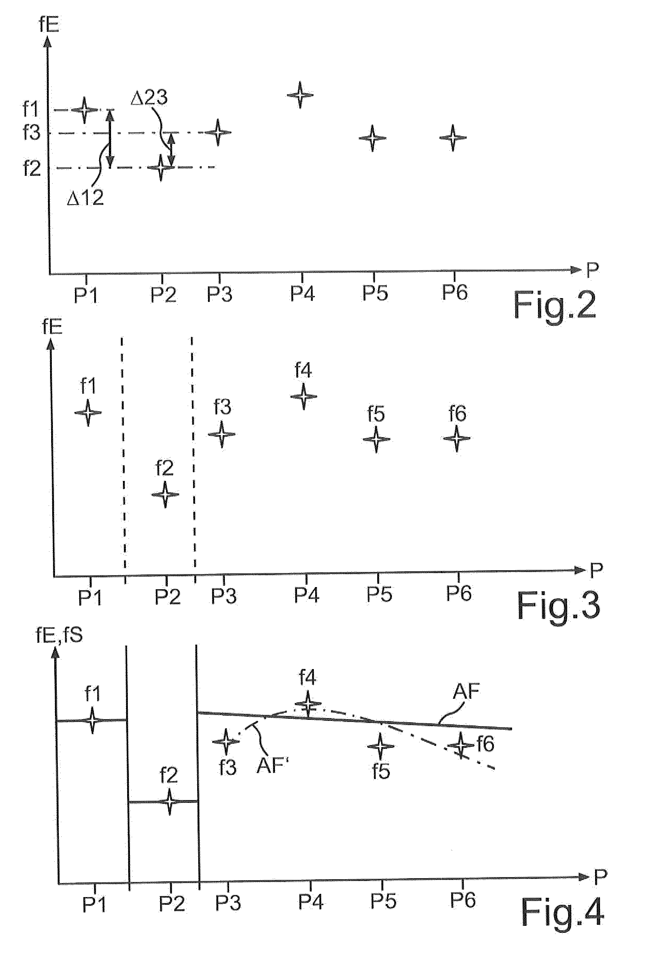

Wie bereits ausgeführt, wird die jeweilige Sendefrequenz fS der Ultraschallsensoren 3 zumindest beim Durchführen einer Kreuzmessung separat für die unterschiedlichen Ultraschallsensoren 3 festgelegt. Beim Festlegen der Sendefrequenzen fS berücksichtigt das Steuergerät 7 verschiedenste Sensordaten: Das Steuergerät 7 erfasst zunächst die Eigenfrequenzen der Ultraschallsensoren 3. Im Ausführungsbeispiel sind die Ultraschallsensoren 3 als verdeckte Sensoren ausgebildet, welche an einer Innenseite des Stoßfängers 4 verdeckt angeordnet sind und die Ultraschallsendesignale 5 durch das Material des Stoßfängers 4 hindurch aussenden. Bei der Bestimmung der Sendefrequenzen fS berücksichtigt das Steuergerät 7 auch die jeweilige Position der Ultraschallsensoren 3 am Kraftfahrzeug 1. Ein Verfahren gemäß einer Ausführungsform der Erfindung, welches zur Festlegung der Sendefrequenzen fS dient, wird nachfolgend unter Bezugnahme auf die Fig. 2 bis 4 sowie die Fig. 5 näher erläutert.

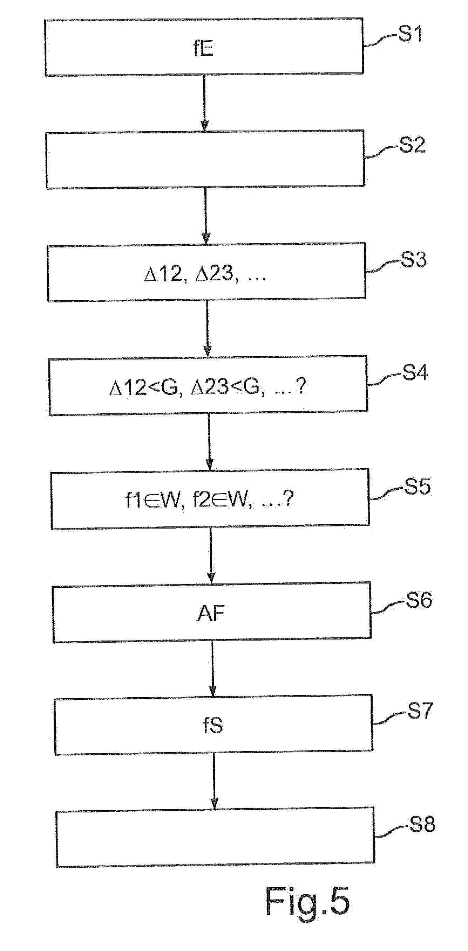

In Fig. 5 ist dabei ein Flussdiagramm des Verfahrens dargestellt. Das Verfahren beginnt in einem ersten Schritt S1, in welchem durch das Steuergerät 7 Eigenfrequenzen fE der jeweiligen Ultraschallsensoren 3 erfasst werden. Diese Eigenfrequenzen fE entsprechen den jeweiligen Ausschwingfrequenzen der Ultraschallsensoren 3 nach Beendigung einer Anregung der jeweiligen Membran mittels eines entsprechenden Anregungssignals. Die Eigenfrequenzen fE werden in Bezug zu den jeweiligen Positionen P der Ultraschallsensoren 3 am Kraftfahrzeug 1 gebracht, wie dies in Fig. 2 anhand eines Diagramms dargestellt ist. Auf der y-Achse sind die Eigenfrequenzen fE aufgetragen, hier beispielhaft die Frequenzwerte f1, f2, f3. Auf der x-Achse hingegen sind die jeweiligen absoluten Positionen P1 bis P6 der Ultraschallsensoren 3 aufgetragen (vergleiche auch die Positionen P1 bis P6 in Fig. 1).

Gemäß Schritt S1 können auch weitere Sensorparameter durch das Steuergerät 7 erfasst werden, nämlich insbesondere die jeweilige Sensortemperatur und die jeweilige Ausschwingzeit.

In einem weiteren Schritt S2 überprüft das Steuergerät 7 anhand der Sensordaten die Ultraschallsensoren 3 auf ihre Funktionalität hin und identifiziert Ultraschallsensoren 3, welche in ihrer Funktionalität etwa aufgrund einer Schnee- oder Eisschicht oder aber einer Verschmutzung eingeschränkt sind. Diejenigen Ultraschallsensoren 3, bei denen durch das Steuergerät 7 ein blockierter Zustand festgestellt wird, bleiben bei den nachfolgenden Verfahrensschritten unberücksichtigt und können beispielsweise bei der jeweiligen Eigenfrequenz fE betrieben werden.

Das Verfahren geht dann zu einem weiteren Schritt S3 über, in welchem durch das Steuergerät 7 die im Diagramm gemäß Fig. 2 aufgetragenen Punkte ausgewertet werden. Zu jeweils zwei benachbarten Ultraschallsensoren 3 wird jeweils eine Differenz zwischen den jeweiligen Eigenfrequenzen fE der benachbarten Ultraschallsensoren 3 bestimmt. Im Diagramm gemäß Fig. 2 sind dabei die Differenzen Δ12 sowie Δ23 gezeigt, d.h. eine Differenz Δ12 zwischen den Eigenfrequenzen f1 und f2 der Ultraschallsensoren 3 an den Positionen P1 und P2: Δ12 = f1 - f2, wie auch eine Differenz Δ23 zwischen den jeweiligen Eigenfrequenzen f2 und f3 der Ultraschallsensoren 3 an den Positionen P2 und P3: Δ23 = f3 - f2. Eine solche Differenz wird zu jedem Paar aus benachbarten Ultraschallsensoren 3 berechnet.

In einem weiteren Schritt S4 überprüft das Steuergerät 7, ob die ermittelten Differenzen Δ12, Δ23 betragsmäßig kleiner als ein vorbestimmter Grenzwert G sind. Wird eine Differenz Δ12, Δ23 identifiziert, welche größer als der Grenzwert G ist, so werden die beiden Ultraschallsensoren 3, deren Eigenfrequenzen fE der Berechnung dieser Differenz Δ12, Δ23 zugrunde gelegt worden sind, bei ihren jeweiligen Eigenfrequenzen fE betrieben, und die Eigenfrequenzen fE dieser Ultraschallsensoren 3 bleiben bei den weiteren Schritten unberücksichtigt. In Fig. 3 ist dabei ein Beispiel gezeigt, bei welchem die Eigenfrequenzen f1 und f2 isoliert betrachtet werden, da die Differenz Δ12 gemäß Fig. 2 den vorgegebenen Grenzwert G überschreitet. Die Ultraschallsensoren 3 an den Positionen P1 und P2 werden also bei den jeweiligen Eigenfrequenzen f1 und f2 betrieben, so dass zu diesen beiden Ultraschallsensoren 3 eine Sendefrequenz fS festgelegt wird, welche der jeweiligen Eigenfrequenz f1 bzw. f2 entspricht.

Gemäß Schritt S5 kann des Weiteren auch überprüft werden, ob die absoluten Werte f1 bis f6 der Eigenfrequenz fE innerhalb eines vorgegebenen Wertebereiches W liegen. Auch diejenigen Werte f1 bis f6 können isoliert betrachtet und die entsprechenden Ultraschallsensoren 3 bei der jeweiligen Eigenfrequenz fE betrieben werden, wenn detektiert wird, dass der Wert f1 bis f6 außerhalb des vorgegebenen Wertebereiches W liegt.

Wie in Fig. 3 dargestellt ist, werden die Ultraschallsensoren 3 an den Positionen P1 und P2 bei den jeweiligen Eigenfrequenzen f1 bzw. f2 betrieben. Die übrigen Eigenfrequenzen f3 bis f6 werden zur Bestimmung einer Ausgleichsfunktion AF verwendet, welche zur Festlegung der jeweiligen Sendefrequenzen fS verwendet wird. Die Bestimmung der Ausgleichsfunktion AF erfolgt gemäß Schritt S6 des Verfahrens.

Beispielhafte Ausgleichsfunktionen AF, AF' sind in Fig. 4 schematisch gezeigt. Als Ausgleichsfunktion AF kann beispielsweise ein Polynom maximal (N-1)-ten Grades bestimmt werden, wobei N die Anzahl der Ultraschallsensoren 3 bezeichnet, deren Eigenfrequenzen fE zur Festlegung der Ausgleichsfunktion AF verwendet werden. Im Ausführungsbeispiel gemäß Fig. 4 gilt somit: N = 4. Es kann somit ein Polynom ersten Grades, zweiten Grades oder dritten Grades definiert werden.

Die Ausgleichsfunktion AF dient zur Festlegung der Sendefrequenz fS der jeweiligen Ultraschallsensoren 3. Die Ausgleichsfunktion AF stellt also eine Abhängigkeit der festzulegenden Sendefrequenz fS von der Position P der Ultraschallsensoren 3 am Kraftfahrzeug 1 dar. Der jeweilige Wert für die Sendefrequenz fS wird anhand der Ausgleichsfunktion AF für die jeweilige Position P3 bis P6 bestimmt, indem der entsprechende Wert der Ausgleichsfunktion AF für die jeweilige Position P3 bis P6 ausgelesen wird. Die Bestimmung der jeweiligen Sendefrequenz fS anhand der Ausgleichsfunktion AF erfolgt gemäß Schritt S7 des Verfahrens. In einem letzten Schritt S8 werden die Ultraschallsensoren 3 dann auf die jeweilige Sendefrequenz fS eingestellt

Mit dem oben beschriebenen Verfahren ist eine fortlaufende bzw. kontinuierliche Anpassung der Sendefrequenzen fS während des Betriebs möglich, wobei Alterungseffekte hier keine Auswirkung haben. Für jeden Stoßfänger 4, 6 kann das Verfahren dabei separat durchgeführt werden, so dass die Einbaustreuung eliminiert werden kann. Da die Festlegung der Sendefrequenzen durch das zentrale Steuergerät 7 erfolgt, kann das Verfahren grundsätzlich für alle Verbauarten der Ultraschallsensoren 3 angewendet werden, nämlich insbesondere sowohl für verdeckte als auch für nicht verdeckte Sensoren.

## Patentansprüche

1. Verfahren zum Betreiben einer Mehrzahl von Ultraschallsensoren (3) eines Kraftfahrzeugs (1) mittels eines Steuergeräts (7) des Kraftfahrzeugs (1), wobei durch das Steuergerät (7) jeweilige Eigenfrequenzen (fE) der Ultraschallsensoren (3) erfasst werden und für die Ultraschallsensoren (3) in Abhängigkeit von der jeweiligen Eigenfrequenz (fE) jeweils eine Sendefrequenz (fS) festgelegt wird, mit welcher der jeweilige Ultraschallsensor (3) zum Aussenden eines Ultraschallsendesignals (5) durch das Steuergerät (7) angesteuert wird,
**dadurch gekennzeichnet, dass**
zur Kompensation von Unterschieden in den Eigenfrequenzen (fE) der Ultraschallsensoren (3) durch das Steuergerät (7) die Sendefrequenz (fS) für zumindest einen der Ultraschallsensoren (3) auch in Abhängigkeit von der Eigenfrequenz (fE) zumindest eines anderen der Ultraschallsensoren (3) festgelegt wird.

2. Verfahren nach Anspruch 1,
**dadurch gekennzeichnet, dass**
die Sendefrequenz (fS) des zumindest einen Ultraschallsensors (3) in Abhängigkeit von der Eigenfrequenz (fE) zumindest eines benachbarten Ultraschallsensors (3) festgelegt wird.

3. Verfahren nach Anspruch 1 oder 2,
**dadurch gekennzeichnet, dass**
die Sendefrequenz (fS) des zumindest einen Ultraschallsensors (3) in Abhängigkeit von einer Position (P) dieses Ultraschallsensors (3) relativ zu dem zumindest einen anderen Ultraschallsensor (3) festgelegt wird.

4. Verfahren nach einem der vorhergehenden Ansprüche,
**dadurch gekennzeichnet, dass**
die Sendefrequenz (fS) des zumindest einen Ultraschallsensors (3) in Abhängigkeit von jeweiligen Eigenfrequenzen (fE) von zumindest zwei anderen der Ultraschallsensoren (3) festgelegt wird.

5. Verfahren nach Anspruch 3 und Anspruch 4,
**dadurch gekennzeichnet, dass**
die Sendefrequenz (fS) des zumindest einen Ultraschallsensors (3) anhand einer Ausgleichsfunktion (AF, AF') festgelegt wird, welche zu den Eigenfrequenzen (fE) des zumindest einen Ultraschallsensors (3) und der zumindest zwei anderen Ultraschallsensoren (3) als eine Abhängigkeit der festzulegenden Sendefrequenz (fS) von der Position (P) der Ultraschallsensoren (3) definiert wird.

6. Verfahren nach Anspruch 5,
**dadurch gekennzeichnet, dass**
als die Ausgleichsfunktion (AF, AF') ein Polynom maximal (N-1)-ten Grades definiert wird, wobei N die Anzahl von Ultraschallsensoren (3) bezeichnet, deren Eigenfrequenzen (fE) zum Definieren der Ausgleichsfunktion (AF, AF') verwendet werden.

7. Verfahren nach Anspruch 5 oder 6,
**dadurch gekennzeichnet, dass**
die Ultraschallsensoren (3) durch das Steuergerät (7) auf einen blockierten, insbesondere vereisten und/oder verschmutzten, Zustand hin überprüft werden und zum Definieren der Ausgleichsfunktion (AF, AF') ausschließlich Eigenfrequenzen (fE) von nicht blockierten Ultraschallsensoren (3) verwendet werden.

8. Verfahren nach einem der Ansprüche 5 bis 7,
**dadurch gekennzeichnet, dass**
zu jeweils zwei benachbarten Ultraschallsensoren (3) jeweils eine Differenz (Δ) zwischen den Eigenfrequenzen (fE) dieser Ultraschallsensoren (3) bestimmt und mit einem vorgegebenen Grenzwert (G) verglichen wird, wobei die Eigenfrequenzen (fE) dieser benachbarten Ultraschallsensoren (3) beim Definieren der Ausgleichsfunktion (AF, AF') nur berücksichtigt werden, wenn die Differenz (Δ) betragsmäßig kleiner als der Grenzwert (G) ist.

9. Verfahren nach einem der Ansprüche 5 bis 8,
**dadurch gekennzeichnet, dass**
durch das Steuergerät (7) überprüft wird, ob die Eigenfrequenzen (fE) der Ultraschallsensoren (3) innerhalb eines vorgegebenen Referenzwertebereichs (W) liegen und zum Definieren der Ausgleichsfunktion (AF, AF') ausschließlich Eigenfrequenzen (fE) innerhalb des Referenzwertebereichs (W) verwendet werden.

10. Verfahren nach Anspruch 8 oder 9,
**dadurch gekennzeichnet, dass**
für diejenigen Ultraschallsensoren (3), deren Eigenfrequenz (fE) außerhalb des Referenzwertebereichs (W) liegt und/oder bei denen die Differenz (Δ) größer als der Grenzwert (G) ist, eine Sendefrequenz (fS) festgelegt wird, welche der jeweiligen Eigenfrequenz (fE) entspricht.

11. Verfahren nach einem der vorhergehenden Ansprüche,
**dadurch gekennzeichnet, dass**
die Ultraschallsensoren (3) als verdeckte Sensoren ausgebildet sind, welche an einer Rückseite eines Verkleidungsteils (4, 6) des Kraftfahrzeugs (1) angeordnet sind, sodass die jeweilige Eigenfrequenz (fE) einer Resonanzfrequenz eines Schwingungssystems aus einer Membran des jeweiligen Ultraschallsensors (3) und einem zugeordneten Bereich des Verkleidungsteils (4, 6) entspricht.

12. Verfahren nach einem der vorhergehenden Ansprüche,
**dadurch gekennzeichnet, dass**
beim Aussenden des Ultraschallsendesignals (5) durch den zumindest einen Ultraschallsensor (3) zumindest ein anderer der Ultraschallsensoren (3), insbesondere zumindest ein benachbarter Ultraschallsensor (3), als Empfangssensor zum Empfangen von in einer Umgebung (8) des Kraftfahrzeugs (1) reflektierten Signalanteilen des Ultraschallsendesignals (5) durch das Steuergerät (7) angesteuert wird.

13. Ultraschallsensoreinrichtung (2) für ein Kraftfahrzeug (1), mit einer Mehrzahl von Ultraschallsensoren (3), und mit einem Steuergerät (7), welches dazu ausgelegt ist, jeweilige Eigenfrequenzen (fE) der Ultraschallsensoren (3) zu erfassen, für die Ultraschallsensoren (3) in Abhängigkeit von der jeweiligen Eigenfrequenz (fE) jeweils eine Sendefrequenz (fS) festzulegen und die Ultraschallsensoren (3) zum Aussenden eines Ultraschallsendesignals (5) mit der jeweiligen Sendefrequenz (fS) anzusteuern,
**dadurch gekennzeichnet, dass**
das Steuergerät (7) dazu ausgelegt ist, zur Kompensation von Unterschieden in den Eigenfrequenzen (fE) der Ultraschallsensoren (3) die Sendefrequenz (fS) für zumindest einen der Ultraschallsensoren (3) auch in Abhängigkeit von der Eigenfrequenz (fE) zumindest eines anderen der Ultraschallsensoren (3) festzulegen.

14. Kraftfahrzeug (1) mit einer Ultraschallsensoreinrichtung (2) nach Anspruch 13.
